(19) Europäisches Patentamt

European Patent Office

Office européen des brevets

(11) **EP 0 825 558 A2**

(12) **EUROPEAN PATENT APPLICATION**

(43) Date of publication:
25.02.1998 Bulletin 1998/09

(51) Int Cl.⁶: **G06T 11/20**

(21) Application number: 97306166.6

(22) Date of filing: 13.08.1997

(84) Designated Contracting States:
**AT BE CH DE DK ES FI FR GB GR IE IT LI LU MC NL PT SE**
Designated Extension States:
**AL LT LV RO SI**

(30) Priority: 15.08.1996 US 700721

(71) Applicant: **XEROX CORPORATION**
**Rochester New York 14644 (US)**

(72) Inventors:
• **Chiu, Patrick**
**Menlo Park, CA 94025 (US)**

• **Moran, Thomas P.**
**Palo Alto, CA 94301 (US)**
• **vanMelle, William J.**
**Los Altos, CA 94022 (US)**

(74) Representative: **Pike, Christopher Gerard et al**
**Rank Xerox Ltd.,**
**Patent Department,**
**Parkway**
**Marlow, Buckinghamshire SL7 1YL (GB)**

(54) **Method and apparatus for displaying free-form graphic objects**

(57) Methods and apparatus for displaying a selection and for deriving an outline of a graphical object for use in a computer based free form graphical display system. Generation of outlines of graphical objects may be used to indicate selection or to perform link rerouting in a system for maintaining the topology of a node-link diagram. An outline is created by performing the steps of: creating a first simple curve at a predetermined distance from one side of said graphical object and creating a second simple curve at the predetermined distance from the other side of the graphical object (2702); determining which of the first simple curve or said second simple curve is longest (2703), and providing the longest of the first and second simple curves as the outline.

```
┌─────────────────────────┐
│ Create A First Outline On One │   2701
│ Side Of The Boundary And A    │
│ Second Outline On The Opposite│
│ Side Of The Boundary At       │
│ A Predetermined Distance      │
└─────────────────────────┘
            │
            ▼
┌─────────────────────────┐
│ Convert First And          │   2702
│ Second Outlines to         │
│ Simple Closed Curves       │
└─────────────────────────┘
            │
            ▼
┌─────────────────────────┐
│ Select Longer Of The       │   2703
│ Outlines As The Outside     │
│ Outline Of The Node         │
└─────────────────────────┘
```

*FIG. 27*

## Description

The present invention is related to techniques for displaying free form graphic objects and for creating outlines of closed curves.

Computer based systems such as pen based systems and "electronic whiteboards" (e.g. the LiveBoard™ available from LiveWorks, a division of Xerox Corporation), provide graphical user interfaces based on utilization of an input device such as a pen, stylus or a cursor control device. In such systems the "display" acts as both a means for showing data and as an input medium. Graphic objects may be "drawn" on the display via pen strokes created using the input device. The graphic objects may represent words, figures or anything that can be displayed. Various operations can then be performed on the graphic objects using an input technique known as gestures. Gestures are themselves merely pen strokes which are interpreted as instructions. Sometimes, such systems will have a draw mode of operation and a gesture mode of operation to distinguish when a pen stroke creates a persistent graphic object or when the pen stroke is treated as a gesture.

When interacting with a computer based system, stopping the thought process in order to wait for operations, e.g. to group or rearrange graphic objects, has a very detrimental effect. Such stoppages generally slow the creative processes. This is of particular impact to the synergy of the group interactions. Artificial delays may cause participants to "lose their train of thought" resulting in the possible loss of ideas. Thus, there is a general need in systems with graphical user interfaces for techniques that provide intuitive and quick manipulation of graphic objects.

A very important facet of operating in such computer based systems is the need for feedback to the user when some action is being carried out. For example, when one or more graphic objects are selected the user should receive some feedback as to what graphic objects were selected. In typical graphic drawing programs a selection loop (an arbitrary shaped closed curve) gesture becomes the selection indicator loop. Sometimes the selected objects may have their appearance emphasized by highlighting or drop-shadowing, but the selection loop is much easier to see visually in indicating what is selected. The drawback of using a loop to make a selection is that it takes time to draw the loop.

Other graphic drawing programs allow for point and click or tap selection. For this type of selection, the bounding box of the selected object is used.

The invention addresses a problem that arises in point and click or tap selection of free form objects. The bounding box of a free form object may include other objects that are not included in the desired selection. For example, if a free form object being selected is a circular closed curve, the bounding box may include parts of adjacent objects in the areas between the closed curve and the bounding box. Therefore, even though the system may correctly identify the closed curve as the selected object, display of the bounding box will not clearly indicate the desired selection to the user.

The invention provides techniques that alleviate this problem by displaying a visible outline of a selected object. The techniques are advantageous because the outline precisely indicates the desired selection to the user after a point and click, tap, or other selection. In addition, the techniques are applicable to a wide variety of free form objects.

In one aspect of the invention, there is thus provided a method for displaying free form graphic objects, comprising: receiving a request for selection of a free form graphic object being displayed; creating an outline of the free form graphic object; and in response to the request, displaying the outline.

In another aspect of the invention, there is provided a system for displaying free form graphic objects, the system comprising: display means for displaying free form graphic objects; input means for providing requests for selection of free form graphic objects being displayed; processing means for creating outlines of free form graphic objects and for responding to the requests for selection; the processing means responding to a request for selection of a free form graphic object by displaying an outline of the free form graphic object.

The invention further addresses problems that arise in displaying outlines, in particular outlines of arbitrarily shaped curves in free form objects. Creating the outline of a graphic object in a free form graphics system is a non-trivial task. One such problem is that, for a closed curve, the system must determine which side is inside and which side is outside the curve.

The invention further provides techniques that alleviate these problems by creating outlines for closed curves. The techniques may create an outline, for example, for the outer perimeter of any object, for the boundary of a node in a node-link diagram, or for an enclosure of a graphical object that is a closed curve.

In another aspect of the invention, there is provided a method for creating outlines of closed curves, comprising: (a) creating a first simple curve at a first distance on a first side of a closed curve having the shape characteristics of the closed curve; (b) creating a second simple curve at a second distance on a second side of the closed curve having the shape characteristics of the closed curve; (c) determining which of said first simple curve and said second simple curve is longer; and (d) providing the longer of said first simple curve and said second simple curve as an outline of the closed curve.

In yet another aspect of the invention, there is provided a system for creating outlines of closed curves, the system comprising: input means for providing a closed curve; processing means for creating an outline of the closed curve; the processing means creating the outline by: creating a first simple curve at a first distance on a first side of a closed curve having the shape characteristics of the closed curve; creating a second simple curve at a second distance on a second side of the closed curve having the shape characteristics of the closed curve; determining which of said first simple curve and said second simple curve is longer; and providing the longer of said first simple curve and said second simple curve as the outline of the closed curve.

In a computer controlled display system capable of supporting free form graphical input, techniques for deriving an outline of a graphical object are disclosed. In one embodiment, the capability to create an outline is used in a system for maintaining the topology of a node-link diagram. Partial outlines are used to enable "link rerouting". Link rerouting corrects link intersection problems that may occur when moving a node in a node-link diagram. Further, in one embodiment an outline is used for indicating selection of a graphical object.

An outline is created by performing the steps of: creating a first simple curve at predetermined distance from one side of said graphical object and creating a second simple curve at a predetermined distance from the other side of the graphical object; determining which of said first simple curve or said second simple curve is longest, and providing said longest of said first and second simple curves as said outline.

When used in the context of link rerouting, outlines of a moved and the fixed node are created. Starting from the link attachment point of the fixed node, the outline is followed until the intersecting link is reached. The remainder of the outline for the fixed node and the portion of the intersecting link from the attachment point are discarded. The intersecting link is followed until it intersects with the moved node. The remainder of the intersecting link is discarded and the outline of the moved node is followed to the attachment point for the moved node. The remainder of the outline of the moved node is then discarded.

The present invention has been implemented for use on a computer controlled display system having a graphical user interface and which utilizes an input device which allows a person to draw graphic objects for input. Examples of such systems include pen based systems, systems utilizing "paint" type programs, electronic whiteboards or electronic desk surfaces.

The invention will now be described, by way of example, with reference to the accompanying drawings, in which:

Figure 1 is a block diagram of a computer based system;
Figure 2 is a representation of a basic graphical user interface and as may be displayed on the display and interfaced through the touch sensitive panel of Figure 1;
Figure 3 is an illustration of a node being moved and corresponding link reshaped;
Figure 4 is a flowchart summarizing the link reshaping;
Figure 5 illustrates the spatial coordinates of link reshaping;
Figures 6 and 7 illustrate an undesirable result of simple geometric scaling of an instance of a link;
Figure 8 is an illustration of curve sample points and segments as found in the representation of a curve;
Figure 9 is a flowchart illustrating the steps for curve transformation;
Figure 10 is an illustration of the link of Figure 3 as flipped across the various axes as may be performed when a node is moved out of its original quadrant;
Figures 11-12 illustrate the moving of a node so that it causes a reshaped link to intersect a node;
Figure 13 is an illustration of flipping attachment points on a node after the movement of the nodes in Figure 11;
Figure 14 is an illustration of selecting a flipped attachment point at various points on an asymmetrically shaped node;
Figure 15 is an illustration of selecting a flipped attachment point when the node is intersected at multiple points;
Figures 16 and 17 are an illustration of a variation of flipping an attachment point by moving an attachment point across the edge of a node;
Figures 18 and 19 are an illustration of how moving a node can cause a link to intersect the node and flipping the attachment point does not correct the node intersection;
Figure 20 is an illustration of link truncation;
Figure 21 is an illustration of link rerouting to correct intersecting nodes;
Figure 22 is a flowchart illustrating the step for rerouting a link;
Figures 23-26 illustrate the steps performed in Figure 22 of rerouting a link;
Figures 27 is a flowchart illustrating the steps for creating the outline of a node boundary; and
Figures 28-30 illustrate the performance of the various steps of Figure 23 for creating the outline of a node boundary.

The present invention addresses problems that can arise when working in a free-form graphics based computer system that is capable of manipulating node-link diagrams. A node-link diagram may include a flowchart, an organization chart, a state diagram, project management charts or the like. It is often desirable to be able to move nodes around in node-link diagram while retaining the links. Also, as the node-link diagram may be created in a free-form manner so that nodes and links have arbitrary shapes, it has been determined that it is desirable that the links retain their original shape characteristics.

The following terms are used in this description and have their indicated meanings:

**Graphic Object**: Any displayed object in 2D space.
**Curve**: A graphic object created manually by the user (e.g. by a pen stroke) or made by other means, such as by a gesture (e.g. a selection rectangle resulting from a selection gesture).

**Free form**: A "free form" object is a graphic object formed of curves. A "free form graphic system" is a system in which a user can create free form objects.

**Pen Stroke**: An action with a pen which becomes an ink stroke or a gesture.

**Ink stroke**: A curve that is persistent.

**Gesture**: A curve made with a pen stroke that is ephemeral and which is interpreted as an action.

**Selection**: A set of graphic objects tagged as being selected.

**Node**: A graphic object or group of graphic objects within some bounded region. Such a bounded region will typically have a visible boundary.

**Link**: An ink stroke touching or attached to one or two nodes. The link may be described as "linking" nodes. A node may also be linked to itself.

**Node-link Diagram**: A diagram that includes graphic objects that can be distinguished into nodes and links with each link linking two nodes or linking a node to itself.

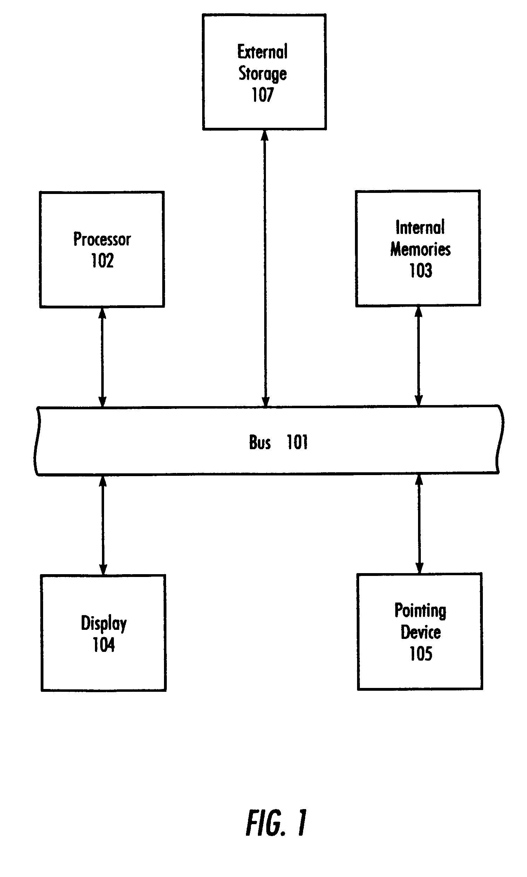

A computer based system as may be utilized in the present invention is illustrated with reference to Figure 1. Referring to Figure 1, the computer based system is comprised of a plurality of components coupled via a bus 101. The bus 101 illustrated here is simplified but any appropriate bus could be used to implement the present invention. The bus 101 may consist of a plurality of parallel buses (e.g. address, data and status buses) as well as a hierarchy of buses (e.g. a processor bus, a local bus and an I/O bus). In any event, the computer system is further comprised of a processor 102 for executing instructions provided via bus 101 from Internal memory 103 (note that the Internal memory 103 is typically a combination of Random Access or Read Only Memories). When in operation, program instructions for carrying out the various functional components described herein are stored in internal memory 103. The processor 102 and Internal memory 103 may be discrete components or a single integrated device. The processor 102 and internal memory 103 comprise circuitry, software, or other means for performing the various processing functions described herein. Also coupled to the bus 101 is external storage 107. The external storage 107 typically includes high capacity storage media such as magnetic or optical disk storage.

Also coupled to the bus 101 is a display 104 and a pointing device 105. In one embodiment, the pointing device 105 is a pen driven touch sensitive panel which is integrated with the display 104 as a touch screen display. Such touch screen displays are well known in the art and are utilized in such systems as Pen based system and for electronic whiteboard systems. However, the pointing device 105 and display 104 need not be integrated so that the pointing device 105 may also be a stylus, mouse, track-ball or other cursor control device.

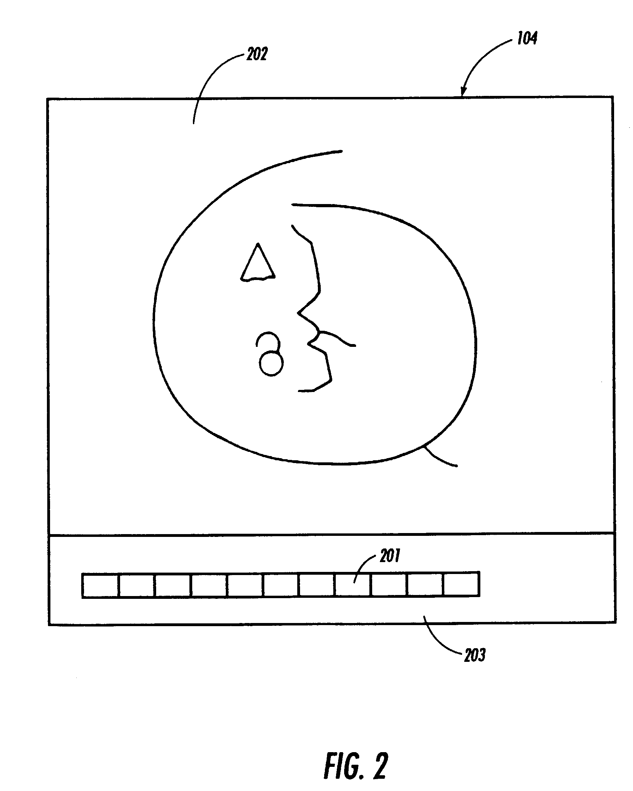

Figure 2 illustrates a particular implementation of a graphical user interface. Referring to Figure 2, the graphical user interface is displayed on display 104 and interacted with via touch panel 105. The graphical user interface employs a working surface and may employ a plurality of accessible functions 201 as is shown. The working surface 202 is where a user may draw various curves and where other graphic objects are displayed. The accessible functions 201 are positioned at the button area 203 of the display. The functions 201 may include operations for editing graphic objects (create, delete, move, shrink, etc.) or changing the operating mode of the touch panel 103 (e.g. switching from draw and gesture mode).

These functions may alternatively be accessed by pull down menus that are commonly found in Windows oriented applications. These functions however are optional in designation, their principal objects being to define operations which are inherent in the operation of the system. These functions may perform the same functions that are invoked by gestures.

One embodiment of the present invention is implemented on a pen based system having a Graphical User Interface (GUI). Such a GUI will typically support operations such as "tap" for selecting/deselecting a graphic object or "double tap" for invoking an operation that may be associated with the graphic object being tapped on. Once an object is selected it may be dragged and dropped to a desired location in the work space. As will be described in greater detail below, such a tap gesture will cause an outlining of the selected graphic object, e. g. a node in a node-link diagram, to be outlined and displayed in a visually distinct manner. This outlining provides the user with feedback that the graphic object has been selected.

The work space of one embodiment permits graphic objects that are made "freehand". Hence nodes and links may have an arbitrary shape. This is consistent with how a whiteboard is used.

One embodiment of the present invention has been implemented using software programs in the C++ programming language, for use on a pen based system, such as the LiveBoard, running under the control of a suitable whiteboard emulation program. Such software programs may be stored on a suitable storage medium such as magnetic diskettes or CD-ROMs.

Node-link diagrams have many uses. They may be used to describe a process flow, or to show relationships between grouped items. The organization and relationship between nodes and links is referred to as the "topology" of the node-link diagram. It is desirable when manipulating the spatial position of nodes that the topology is retained.

A node in a node-link diagram may have an arbitrary shape and may represent a group of related graphic objects. These graphic objects may typically represent letters, words or other information conveying symbols. A node may be represented by the encircling of graphic objects with an ink stroke or by any grouping means. A node may have a visible boundary which indicates the spatial limits of the node. A node may have multiple links to other nodes. Selection of a node may also cause selection of its links.

Links are ink strokes that are used to provide a visual connection between one or more nodes. Links may also have an arbitrary shape. Providing links between nodes is useful, particularly when repositioning the nodes. Being able to retain the visual association between the nodes even as they are moved helps provide unencumbered usage of the graphics based system.

A link is created by simply drawing a curve that "touches" at least one node. By touching a node it is meant that an appropriate criterion for touching or nearness is met, for example, the criterion could require that the link endpoint be within a predetermined distance of the node boundary. The point at which a link "touches" a node is termed an "attachment point". Links are associated with at least one node (i.e. one-ended) and at most two nodes.

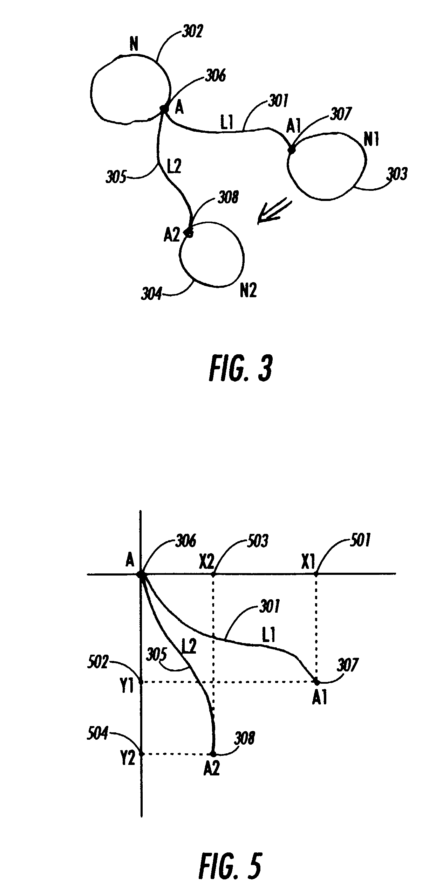

One embodiment can handle multiple nodes and links, but the basic problems resulting from links can be understood from the node-link diagram illustrated in Figure 3. Figure 3 shows a single link L1 301 with a node at each end, a stationary node N 302 and a node N1 303 that the user moves manually to a position labeled as N2 304. As a result of this move the link L1 301 is reshaped to be the link shown as L2 305. The attachment points of the link to the nodes are shown as A 306, A1 307, and A2 308.

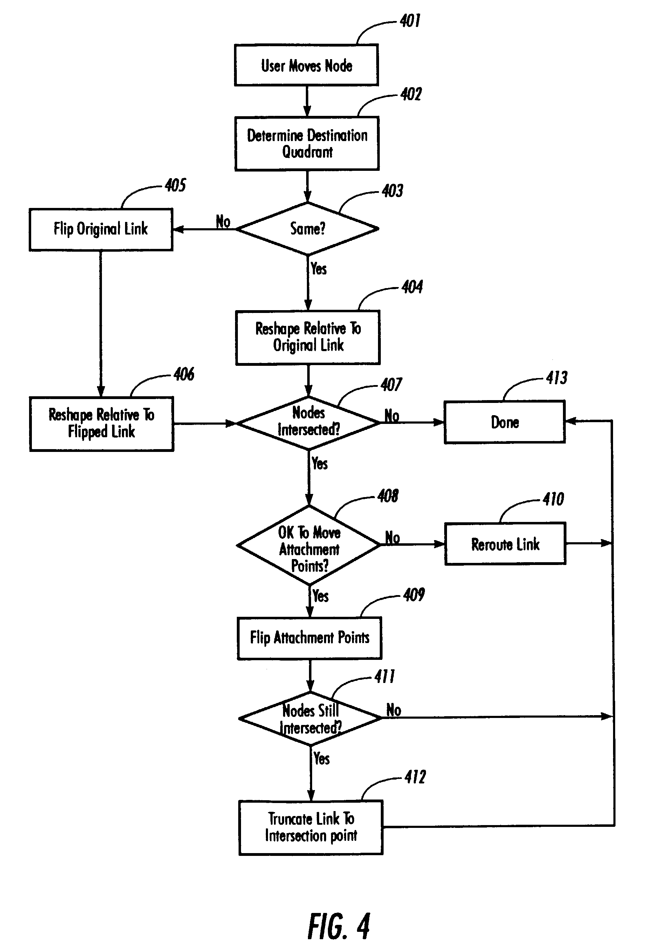

Figure 4 is a flowchart which overviews link reshaping. Referring to Figure 4, first a user moves a node in a node-link diagram, step 401. This can be performed by a simple drag and drop operation or by any operation supported by the underlying graphical user interface. The first step in reshaping the node and links is to identify the destination quadrant, step 402. A determination is made if the destination quadrant is the same, step 403. Determination of the destination quadrant will indicate if flipping of the original link is required. If the destination quadrant is the same, curve transformation for the link occurs relative to the original link, step 404. If the destination quadrant is not the same, the original link is flipped across the respective axes to the destination quadrant, step 405. Curve transformation for the link is then performed relative to the flipped link, step 406.

After the link has been reshaped, it is determined if any of the nodes are intersected by the reshaped link, step 407. If no links intersect a node, then the link reshaping is completed, step 413. If links do intersect a node, it is determined if attachment points of the nodes may be moved, step 408. If they cannot, link rerouting may be performed, step 409. Otherwise, the attachments points to the nodes are rerouted, step 410. A check is then made to determine if an intersection still exists, step 411. If no nodes are intersected after the attachment points are flipped, the link reshaping is completed, step 413. If a node remains intersected by a link, the link is truncated at the point in which a node is intersected, step 412. Upon completion of truncation, the reshaping of the link is completed, step 413.

It should be noted that attachment points may be selected and moved by the user. This is necessary since the user may want to alter the relationship between the nodes. Further, the user may want to do this if the user is not satisfied with the results of an automatic link reshaping.

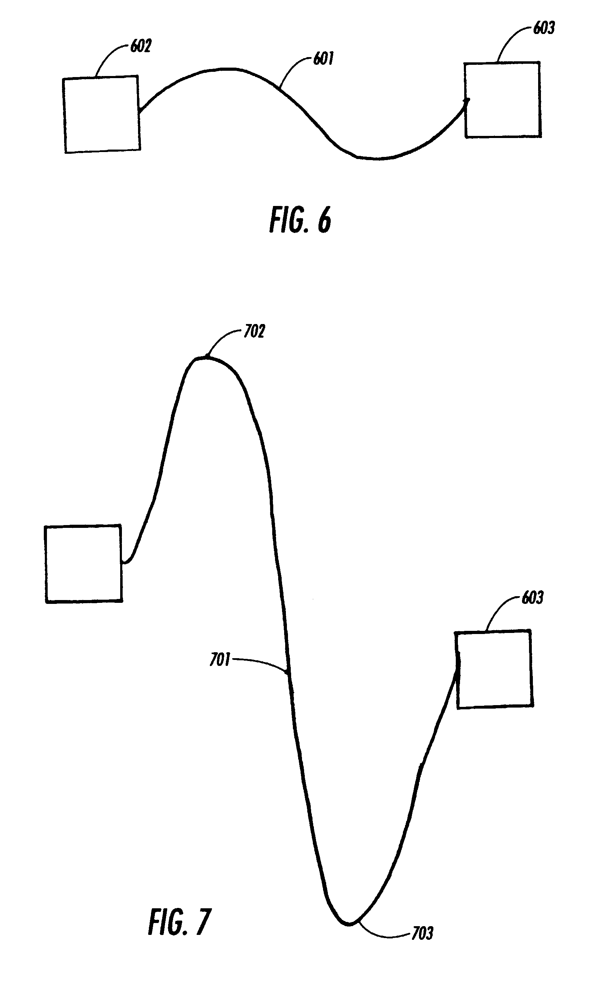

As noted above, a link is an instance of a curve. Curve transformation can be conceptually thought of as the stretching or contraction of a link so that it retains its shape characteristics. For curve transformation, the link is considered in isolation, as shown in Figure 5. Link L1 301 goes from A 306 to A1 307. It is desirable that the link L2 305, which goes from A 306 to A2 308, have the same shape characteristics as L1 301. It should be noted that in this representation the attachment point A 306 of the fixed node is placed at the origin of a two-dimensional coordinate system. So attachment point A1 307 is at coordinates (x1 501, y1 502) and attachment point A2 308 is at coordinates (x2 503, y2 504). The objective is to transform the remainder of the curve so that the shape characteristics of L1 301 are retained.

One way of performing a transformation is a simple geometric transformation (e.g. scaling). However, it has been determined that this causes undesirable results in certain situations. Such an instance is illustrated in Figures 6 and 7. Referring to Figure 6, a link 601 in the shape of a single period of a sine curve is attached to node 602 and 603. A simple geometric transformation is typically given by the following: The x-y coordinates of the original attachment point are <x1,x2> and <x2,y2> for the attachment point as moved. To transform the link, every point P<x,y> on the link is moved to P'<x',y'>, where $x' = x * x2/x1$ and $y' = y * y2/y1$. Note that in some cases the denominator may be small or even zero. The result is illustrated in Figure 7. Referring to Figure 7, as a result of moving node 603 the link 701 is transformed so that "humps" 702 and 703 of the curve are greatly extended. This is a result of the denominator being a small fractional number. Thus, a different approach for reshaping the link could be used to solve this problem.

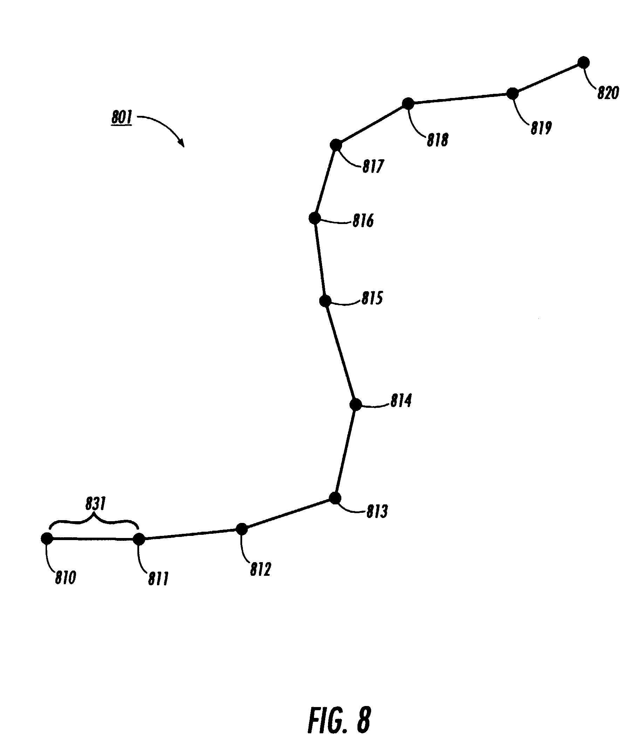

To better understand how curve transformation occurs, an understanding of how a curve is represented is necessary. The simplest way to represent a curve is by its set of sample points. These are naturally ordered by their order of input. Some systems represent a curve directly by a bitmap, or a bitmap generated by fitting a curve(spline) through the sample points. In the currently preferred embodiment, a curve is represented by its starting point and its set of segments, where a segment is the vector <dx, dy> determined by two consecutive sample points. This is illustrated in Figure 8. Referring to Figure 8, a curve 801 appears on a work surface. The curve 801 is detected by the samplings which occurred at points 810-820. The distance between sample points is termed a segment. For example, a segment 831 is defined between sample points 810 and 811 where sample point 811 is the end sample point. For convenience, the curve is normalized by orienting it so that the fixed attachment point is the starting point and the moved attachment point is the ending point of the curve.

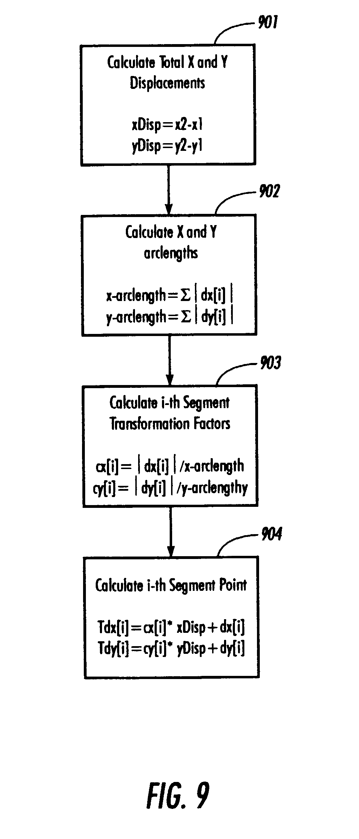

The curve transformation technique of the illustrated embodiments takes the difference between the before and after attachment points and distributes this onto the segments of the curve. In other words, the points making up the link are transformed to new locations so that the shape of the original link is maintained. The technique is described with reference to the flowchart of Figure 9 and the coordinate points described in Figure 5. Referring to Figure 9, the first step is to calculate total X and Y displacements, step 901. Let (x1, y1) and (x2, y2) be the before and after positions of the moved attachment point of the link. Then:

$$xDisp = x2 - x1,$$

$$yDisp = y2 - y1.$$

The remaining steps are then carried out for each of the segments of the link. For the i-th segment <dx[i], dy[i]>, the transformation is calculated, as described in steps 902-904, resulting in a new i-th segment <Tdx[i], Tdy[i]>. This is performed by the following calculation:

First the x and y arclengths of the curve are computed, step 902:

$$x\text{-arclength} = \Sigma |dx[i]|,$$

$$y\text{-arclength} = \Sigma |dy[i]|,$$

where |x| denotes the length or absolute value of x.

Then the transformation factors cx[i] and cy[i] are calculated based on the x and y lengths of the i-th segment, step 903:

$$cx[i] = |dx[i]|/(x\text{-arclength}),$$

$$cy[i] = |dy[i]|/(y\text{-arclength}).$$

Now the contributions of the displacement to be added to the i-th segment are given by cx[i]*xDisp and cy[i]*yDisp, so the new i-th segment is computed by, step 904:

$$Tdx[i] = cx[i]*xDisp + dx[i],$$

$$Tdy[i] = cy[i]*yDisp + dy[i].$$

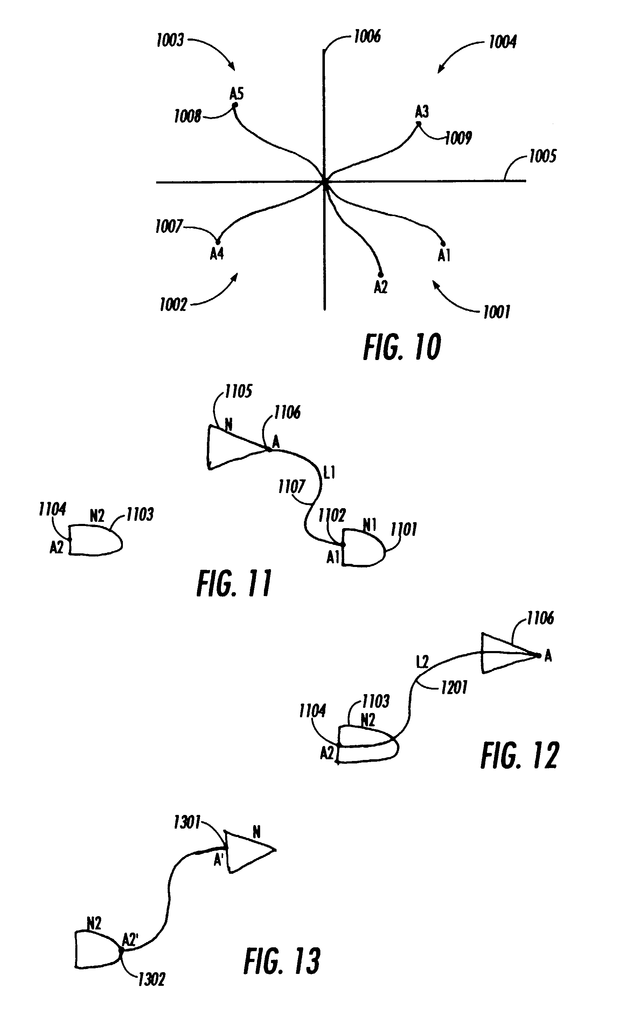

Note in the examples in Figures 3 and 5 that attachment points A1 and A2 are in the same quadrant of the coordinate system defined where attachment point A is the origin. Besides being reshaped, if A2 is in a different quadrant than A1, then the link shape can be flipped (mirror-reversed) around the x-axis, the Y-axis, or both. This flipping is a desirable visual property, since this is what the user naturally expects. Figure 10 shows these three cases of flipping. If A1 were moved from quadrant 1001 to quadrant 1002, the result would be A4 1007. The flipping would occur about the Y-axis 1006. If A1 were moved from quadrant 1001 to quadrant 1003, the result would be A5 1008. The flipping would occur about the Y-axis 1006 and the x-axis 1005. Finally, if A1 were moved to quadrant 1004, the result would be A3 1009. The flipping would occur about the x-axis 1005.

Generally, when movement out of the quadrant occurs, what first occurs is the flipping of the link to the destination quadrant. Flipping the link shape is accomplished by a simple geometric transformation to the desired quadrant. This is followed by the link reshaping described above performed relative to the flipped link.

Having transformed the shape of the link, this is all that needs to be done in the simple case shown in Figure 3. But Figures 11 and 12 illustrate a case where the reshaping and flipping have created undesirable results. Referring to Figure 11, node N1 1101 with attachment point A1 1102 is moved to a position denoted as N2 1103 with attachment point A2 1104. Fixed node N 1105 has attachment point A 1106. Link L1 1107 links node N 1105 with node N1 1101. The result of this after link reshaping and flipping is shown in Figure 12. The link L1 1107 has been reshaped to link L2 1201, and L2 1201 intersects both node N 1101 and node N2 1103. This is surely not what the user wants. Thus, techniques for adjusting the attachment points to obtain satisfactory results are needed.

A first step in correcting node intersection is to just flip the attachment points of the link. There are two cases of flipping -- across a node or along an edge. In flipping an attachment across a node, the flipping occurs to the opposite side of the node. The results of applying this technique to the example in Figures 11-12 is shown in Figure 13, where attachment points A and A2 in Figure 13 are moved to A' 1301 and A2' 1302. With respect to maintaining the topography and visual results, this provides quite satisfactory results. However, it is recognized that in some instances the node shape has a meaning such that a relationship between nodes will be interpreted differently depending on where a link is attached. For example, attachment on one side indicates an input and attachment on the opposite side indicates an output. Thus, internal node representations will contain some indicator, such as a flag or a node type, which may be used to indicate whether or not the flipping of attachment points is permitted.

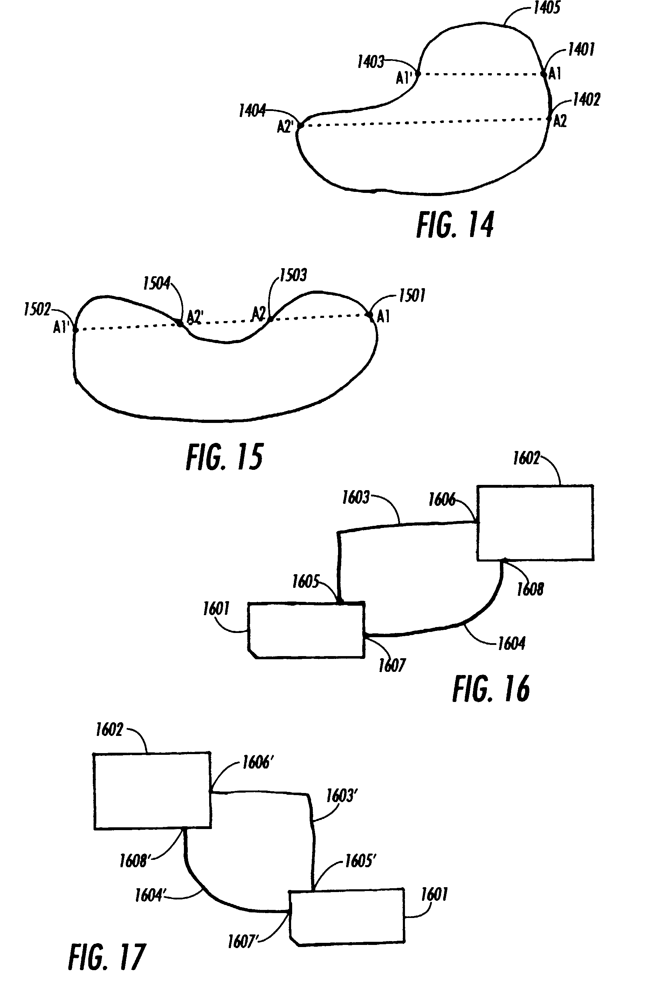

Flipping attachment points is straightforward in the case where the node shape is nearly symmetric about the axis of flip. So consider the asymmetric case. Only the case of left-right flipping about the vertical axis is considered; the other cases are similar. The asymmetric case is illustrated in Figure 14. Referring to Figure 14, an asymmetrically shaped node 1405 is shown. To flip a point A1 1401 from right to left a horizontal line is drawn from A1 1401 to the other side of the node 1405 until it intersects the node at Al' 1403, which is the new attachment point. Note that in an asymmetric case the flipped points can be quite different. For example, both A1 1401 and A2 1402 are on the far right of the node, and the flipped point A2' 1404 is on the far left of the node 1405, but flipped point Al' 1403 is in the middle of the node 1405.

Another case to consider is where the horizontal line intersects the node enclosure in more than two places. It is then important to pick the corresponding point to flip to. This case is illustrated in Figure 15. Referring to Figure 15, points A1 1501 and Al' 1502 correspond as flip points and points A2 1503 and A2' 1504 correspond as flip points. To identify the corresponding flip point, number the intersection points going from left to right. Determine the number I of the current attachment point (i.e. the attachment point is the Ith from the left). Now number the points going from right to left. The corresponding point is the Ith point from the right.

Flipping an attachment point along the edge of a node occurs when movement of the node is parallel to the node edge having the attachment. Further, the beginning and ending location of the nodes must be such that there is no overlap. Flipping an attachment point across the edge of a node is illustrated in Figures 16 and 17. Flipping an attachment point across an edge may occur on one node while flipping across the node may occur across the other node. Referring to Figure 16, nodes 1601 and 1602 are linked via links 1603 and 1604. Link 1603 is attached to node 1601 at attachment point 1605 and to node 1602 at attachment point 1606. Link 1604 is attached to node 1601 at attachment point 1607 and to node 1602 at attachment point 1608. Referring now to Figure 17, the node 1601 has been moved to a new position wherein the attachment points 1606 and 1607 are flipped across nodes 1602 and 1601, respectively, to attachment points 1606' and 1607'. Meanwhile the attachment points 1605 and 1608 have been flipped across the edge of their respective nodes 1601 and 1602 to attachment points 1605' and 1608'. Note that the links 1603 and 1604 have been reshaped to links 1603' and 1604' and retain their basic shape characteristics.

The flipping of an attachment point along an edge is accomplished by finding a center point of the edge, finding a distance X between the center point and the attachment point, and flipping the attachment point to a location a distance X on the opposite side of the center point.

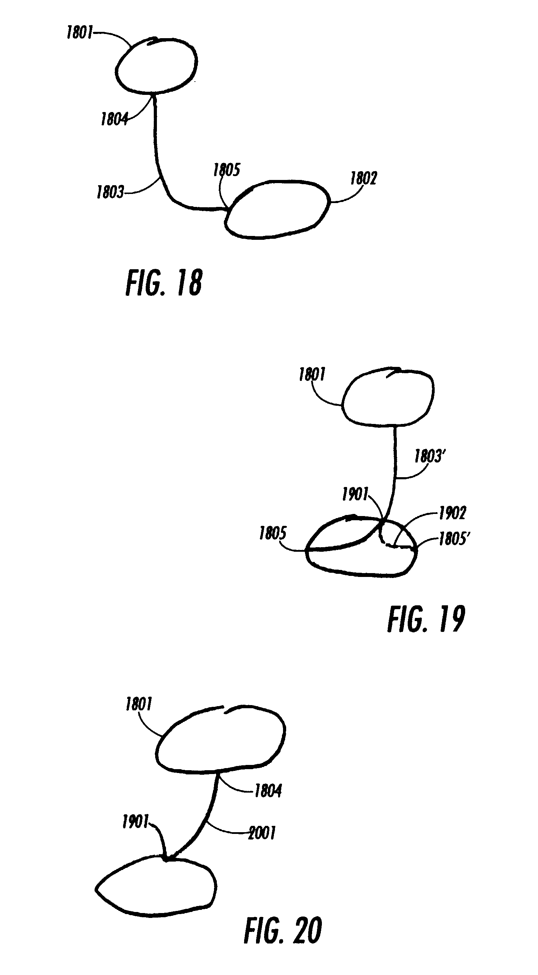

Even when these techniques are applied, the link can still intersect a node. This is illustrated in Figures 18-19. Referring to Figure 18, node 1801 is connected to node 1802 via link 1803. Link 1803 is attached to node 1801 at attachment point 1804 and to node 1802 at attachment point 1805. Figure 19 illustrates the results of moving node 1802. Referring to Figure 19, the link 1803 has been reshaped and is illustrated as link 1803'. It is noted that the link 1803' intersects the node 1802 at point 1901. Point 1805' indicates where attachment point 1805 would be flipped. However, it is clear that even the flipping of the node would not correct the intersecting link (as illustrated by the dotted line 1902 which indicates the effect of attachment points flipping). Thus, a further "unintersection" technique is required.

To truncate a link from a node, simply find where the link intersects the node and then make that the attachment point. When a link is truncated, the overall shape of the link changes because the truncated portions are discarded. In the currently preferred embodiment, the link 1803' is truncated at intersection point 1901, deleting the segment of the link from intersection point 1901 to attachment point 1805. The result is shown in Figure 20 wherein the reshaped link is illustrated as link 2001.

Note that in cases where there are multiple intersection points of a link on a node, the intersection point that is closest to the attachment point of the fixed node is chosen. Further, note that an alternative to truncating the link would be to curve transform the link at the point the link intersected the node.

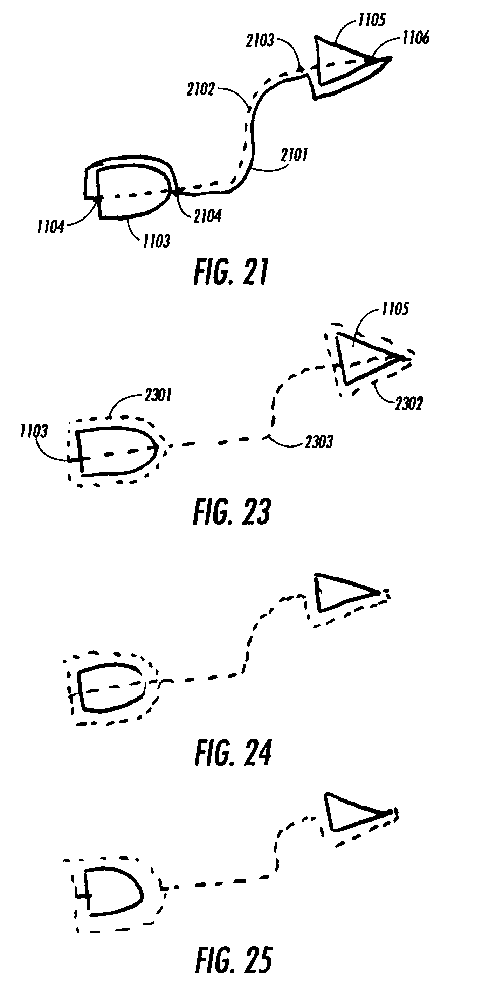

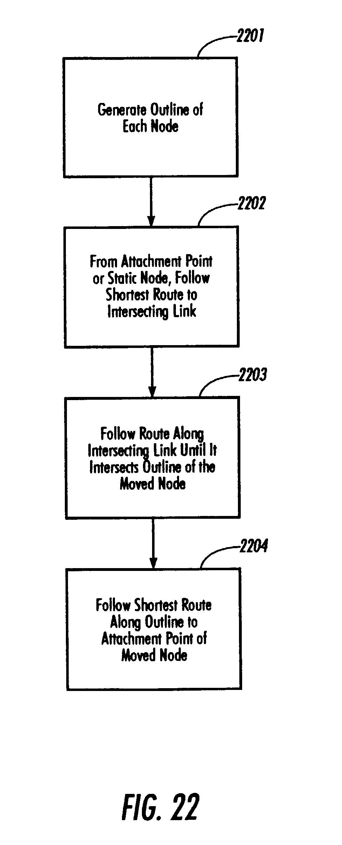

Link rerouting is performed when an attachment point is not to be moved (flipped) and a node intersection occurs. An example of link rerouting is illustrated in Figure 21. Figure 21 illustrates a link rerouting that may be used to correct the node intersecting link of Figure 12. Referring to Figure 21, rerouted link 2101 has been rerouted to avoid the intersection with the node. Dashed line 2102 indicates where the link was originally after reshaping. The rerouted link 2101 follows the shape of the node 1105 from the attachment point 1106 to a point 2103 where it meets up with intersecting link 2102. Then the rerouting follows the shape of the link 2102 up to where it would intersect node 1103 (i.e. point 2104). From there the route follows the shape of node 1103 to the attachment point 1104.

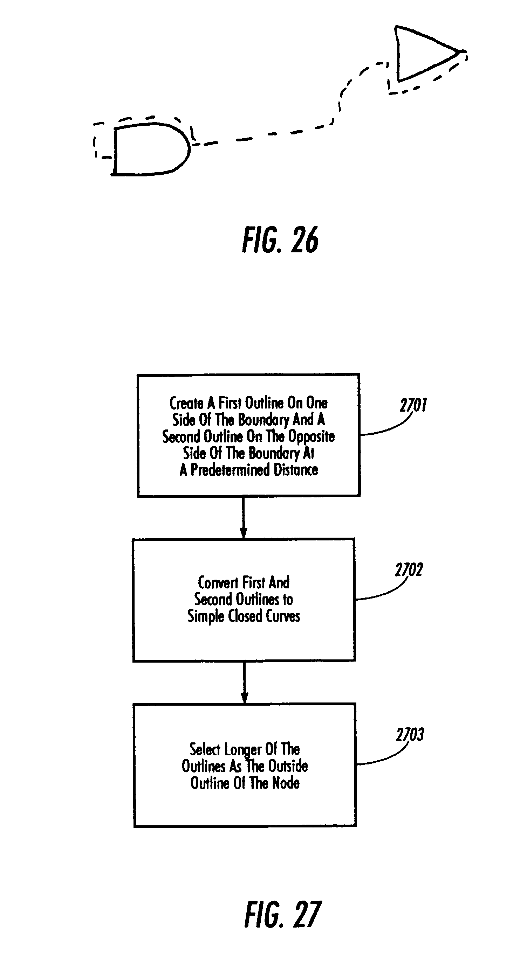

Figure 22 is a flowchart illustrating the steps of a simple technique for rerouting a link. It is assumed that an intersecting link has been generated. First, an outline of each of the nodes is generated, step 2201. A description of how node outlines are generated is provided below with respect to Figures 27-30. In any event, this is illustrated in Figure 23 where outlines 2301 and 2302 of nodes 1103 and 1105 respectively, are illustrated. Also shown in Figure 23 is intersecting link 2303.

Next, starting from the attachment point of the fixed node, a route following the outline and having the shortest distance to the intersecting link is chosen, step 2202. This is illustrated in Figure 24. Note that the portions of outline 2302 and intersecting link 2303 that have not been used have been discarded.

The route then follows the intersecting link until it reaches the point where the outline of the moved node is intersected and the remainder of the intersecting link discarded, step 2203. This is illustrated in Figure 25 where the portion of the link 2303 intersecting node 1103 are discarded.

At this point the route follows the shape of the moved node in the direction so that the attachment point of the moved node is reached in the shortest distance, step 2204. This is illustrated in Figure 26 wherein the portions of the outline 2301 that are not used are discarded.

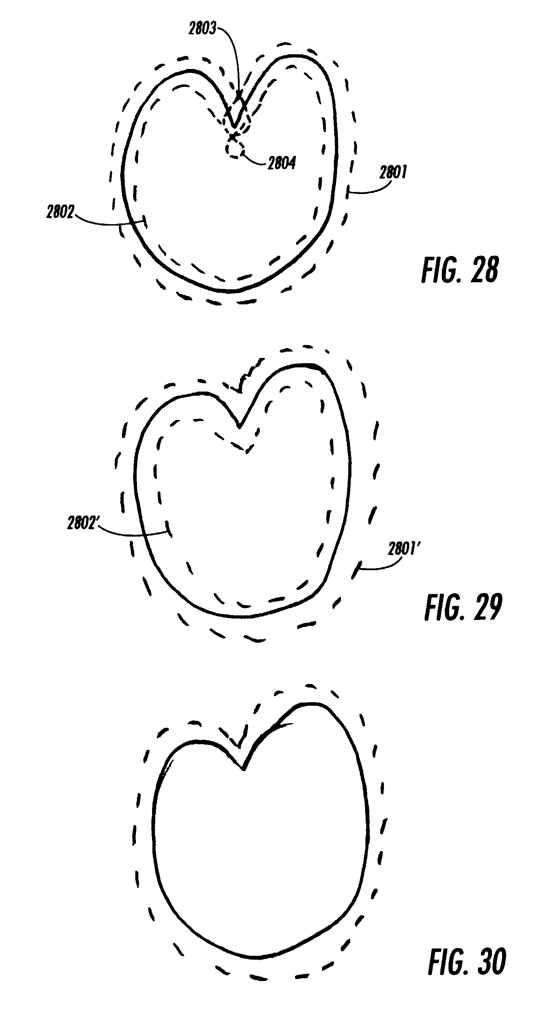

Finding the outline of the boundary of an arbitrarily shaped node is a non-trivial task. For an arbitrarily shaped closed curve representing the boundary, there is difficulty in determining whether a point lies on the inside or outside of the curve. The technique for finding an outline is described by the flowchart of Figure 27. Referring to Figure 27, a first outline is drawn from a starting point on one side of a boundary and a second outline is drawn from the starting point on the opposite side of the boundary, step 2701. It is necessary to draw outlines on both sides of the boundary since it is not readily known where the curve started from and so it is unclear which is the "inside" or "outside" outline. In any event, each of the outlines is drawn the same predetermined distance from the boundary. This is illustrated in Figure 28 where an outside outline 2801 and an inside outline 2802 are shown. It should be noted that what effectively occurs is the drawing of outlines on the inside and outside of the node boundary.

Next, the outlines are converted into simple closed curves, step 2702. This is accomplished for each of the outlines by trimming small pieces at the end of the resulting curves. Such smaller curves are illustrated in Figure 28 by the curve 2803 of outline 2801 and curve 2804 of outline 2802. These curves arise by the outlining process. The discarding of these smaller curves is illustrated in Figure 29 as outlines 2801' and 2802'.

Finally, the longer of the outlines is selected as the outline for the node, step 2703. Determining the longer of the outlines is accomplished by simply summing the distances of the various segments of the two outlines and then comparing the sums. The longer of the outlines will clearly be the "outside" outline for the node. This is illustrated in Figure 30.

It should be noted that the outlining process described above is used for more than link rerouting. In one embodiment, the same outlining process is used to indicate selection of a node. This is done by highlighting or coloring the outline curve to give visual feedback to the user that the node enclosed by the outline is selected.

Thus, methods and apparatus for displaying objects and creating outlines of closed curves in a graphics based computer system have been disclosed.

A pen based system has been described with a whiteboard emulation program and with a graphical user interface interacted with via a touch panel. The invention could be implemented in other types of systems running other types of programs and with other types of user input devices.

Point and click and tap selection techniques have been described, but the invention could be implemented with other selection techniques.

User interface techniques have been described in which graphic objects are thought of as existing on a work surface, but the invention could be implemented with any user interface in which a user can select a graphic object.

A specific outline creating technique has been described, but the invention could be implemented to provide selection feedback using other outline creating techniques.

An outline creating technique has been described in relation to an implementation in which an outline is displayed. The invention could be implemented, however, to create outlines in any system that receives data defining graphic objects.

Further, the described outline creating technique draws two outlines at the same distance from a curve such as a boundary, but different distances can be used as long as the resulting outlines indicate the location of the curve.

## Claims

1. A method for displaying free form graphic objects, comprising:

    receiving a request for selection of a free form graphic object being displayed;
    creating an outline (2801') of the free form graphic object; and
    in response to the request, displaying the outline.

2. A method according to claim 1 in which the free form graphic object is a closed curve, said method creating an outline (2801') of the closed curve by:

    creating a first simple curve (2801') at a first distance on a first side of the closed curve having the shape characteristics of the closed curve;
    creating a second simple curve (2802') at a second distance on a second side of the closed curve having the shape characteristics of the closed curve;
    determining which of said first simple curve and said second simple curve is longer; and
    providing the longer of said first simple curve and said second simple curve as the outline.

3. A system for displaying free form graphic objects, the system comprising:

> display means (104) for displaying free form graphic objects;
> input means (105) for providing requests for selection of free form graphic objects being displayed;
> processing means (102) for creating outlines of free form graphic objects and for responding to the requests for selection; the processing means responding to a request for selection of a free form graphic object by displaying an outline (2801') of the free form graphic object.

4. A system in accordance with claim 3 in which the processing means (102) controls a work surface; the input means (105) further being for creating, selecting and moving free form graphic objects on said work surface; the display means (104) further being for displaying the contents of said work surface; the processing means further being for interpreting images on said work surface as graphic objects.

5. A system in accordance with claim 3 or claim 4 in which the processing means (102) further comprises:

> means for creating a first closed curve (2801) about one side of said graphic object and a second closed curve (2802) about a second side of said graphic object;
> means for making said first closed curve into a first simple closed curve (2801') and for making said second closed curve into a second simple closed curve (2802'); and
> means for determining the longer of said first simple closed curve and said second simple closed curve.

6. A method for creating outlines of closed curves, comprising:

> (a) creating a first simple curve (2801') at a first distance on a first side of a closed curve having the shape characteristics of the closed curve;
> (b) creating a second simple curve (2802') at a second distance on a second side of the closed curve having the shape characteristics of the closed curve;
> (c) determining which of said first simple curve and said second simple curve is longer; and
> (d) providing the longer of said first simple curve and said second simple curve as an outline of the closed curve.

7. A method according to claim 6 in which (a) comprises:

> (a1) creating a first curve (2801) on said first side of said closed curve so that each point on the closed curve has a corresponding point on the first curve that is separated from the closed curve by the first distance;
> (a2) determining if multiple closed curves are created by (a1); and
> (a3) removing all but the largest of said closed curves to create said first simple curve (2801').

8. A method according to claim 6 or claim 7 in which (b) comprises:

> (b1) creating a second curve (2802) on said second side of said closed curve so that each point on the closed curve has a corresponding point on the second curve that is separated from the closed curve by the second distance;
> (b2) determining if multiple closed curves are created by (b1);
> (b3) removing all but the largest of said closed curves to create said second simple curve (2802').

9. A system for creating outlines of closed curves, the system comprising:

> input means (105) for providing a closed curve;
> processing means (102) for creating an outline of the closed curve; the processing means creating the outline by:
> creating a first simple curve (2801') at a first distance on a first side of a closed curve having the shape characteristics of the closed curve;
> creating a second simple curve (2802') at a second distance on a second side of the closed curve having the shape characteristics of the closed curve;
> determining which of said first simple curve and said second simple curve is longer; and
> providing the longer of said first simple curve and said second simple curve as the outline of the closed curve.

10. A system in accordance with claim 9 in which the processing means (102) comprises:

> interpreting means for interpreting a collection of graphic objects as a node-link diagram;
> maintenance means for maintaining the topology of a node-link diagram when a node (1101) is moved;
> detection means for detecting that a link (2102) intersects a node as a result of moving said node; and

rerouting means for rerouting said intersecting link based on outlines (2301, 2302) of said moved node (1103) and a fixed node (1105) attached to the link.

FIG. 1

**FIG. 2**

FIG. 3

FIG. 5

**401** User Moves Node

**402** Determine Destination Quadrant

**403** Same?
— No → **405** Flip Original Link
— Yes ↓

**405** Flip Original Link → **406** Reshape Relative To Flipped Link

**404** Reshape Relative To Original Link

**407** Nodes Intersected?
— No → **413** Done
— Yes ↓

**408** OK To Move Attachment Points?
— No → **410** Reroute Link
— Yes ↓

**409** Flip Attachment Points

**411** Nodes Still Intersected?
— No →
— Yes ↓

**412** Truncate Link To Intersection point

FIG. 4

**FIG. 6**

**FIG. 7**

FIG. 8

901

Calculate Total X and Y
Displacements

$xDisp = x2 - x1$
$yDisp = y2 - y1$

902

Calculate X and Y
arclengths

$x\text{-arclength} = \Sigma \mid dx[i] \mid$
$y\text{-arclength} = \Sigma \mid dy[i] \mid$

903

Calculate i-th Segment
Transformation Factors

$\alpha[i] = \mid dx[i] \mid /x\text{-arclength}$
$\alpha y[i] = \mid dy[i] \mid /y\text{-arclengthy}$

904

Calculate i-th Segment Point

$Tdx[i] = \alpha[i]^* \, xDisp + dx[i]$
$Tdy[i] = \alpha y[i]^* \, yDisp + dy[i]$

## FIG. 9

**FIG. 10**

**FIG. 11**

**FIG. 12**

**FIG. 13**

FIG. 14

FIG. 15

FIG. 16

FIG. 17

FIG. 18

FIG. 19

FIG. 20

**FIG. 21**

**FIG. 23**

**FIG. 24**

**FIG. 25**

FIG. 22

```
                                          ┌─2201
        ┌─────────────────────┐
        │                     │
        │   Generate Outline of │
        │      Each Node       │
        │                     │
        └─────────────────────┘
                  │
                  ▼                       ┌─2202
        ┌─────────────────────┐
        │  From Attachment Point │
        │  or Static Node, Follow │
        │    Shortest Route to   │
        │    Intersecting Link   │
        └─────────────────────┘
                  │
                  ▼                       ┌─2203
        ┌─────────────────────┐
        │   Follow Route Along   │
        │ Intersecting Link Until It │
        │  Intersects Outline of the │
        │       Moved Node       │
        └─────────────────────┘
                  │
                  ▼                       ┌─2204
        ┌─────────────────────┐
        │  Follow Shortest Route │
        │    Along Outline to    │
        │  Attachment Point of   │
        │      Moved Node        │
        └─────────────────────┘
```

FIG. 22

**FIG. 26**

2701 — Create A First Outline On One Side Of The Boundary And A Second Outline On The Opposite Side Of The Boundary At A Predetermined Distance

2702 — Convert First And Second Outlines to Simple Closed Curves

2703 — Select Longer Of The Outlines As The Outside Outline Of The Node

**FIG. 27**

*FIG. 28*

*FIG. 29*

*FIG. 30*